# EUROPEAN PATENT SPECIFICATION

(11) **EP 3 672 768 B1**
(45) Date of publication and mention of the grant of the patent: **23.06.2021**
(21) Application number: 18755203.9
(22) Date of filing: 22.08.2018
(51) Int. Cl.: B26D 5/00, B26D 7/26, B26D 1/29, B29B 9/06

(54) **METHOD FOR ALIGNING A CUTTER PLATE USING A REMOTE ALIGNMENT ADJUSTMENT DEVICE**
VERFAHREN ZUR AUSRICHTUNG EINER MESSERPLATTE EINES GRANULATORS MIT EINER FERNJUSTIERUNGSVORRICHTUNG
PROCÉDÉ D'ALIGNEMENT D'UNE PLAQUE DE COUPE D'UN GRANULATEUR À L'AIDE D'UN DISPOSITIF DE RÉGLAGE D'ALIGNEMENT À DISTANCE

(30) Priority: 24.08.2017 EP 17187821
(43) Date of publication of application: 01.07.2020
(73) Proprietor: Basell Polyolefine GmbH, 50389 Wesseling (DE)
(72) Inventor: WIRADJAJA, Arfie, 51467 Bergisch Gladbach (DE); SACHS-WEINGAERTNER, Guenter, 85098 Grossmehring (DE)
(74) Representative: LyondellBasell
(86) International application number: PCT/EP2018/072607
(87) International publication number: WO 2019/038312

(56) References cited:
- WO-A1-2016/098422
- WO-A2-01/94088
- DE-A1- 1 959 507
- JP-A- H0 596 533
- JP-A- 2004 230 874
- JP-A- 2016 117 188
- US-B1- 6 575 069

## Description

### FIELD OF THE INVENTION

The present disclosure provides a method for aligning a cutter plate using a remote alignment adjustment device and a process for preparing polyethylene pellets in a pelletizer using said remote alignment adjustment device.

### BACKGROUND OF THE INVENTION

Pellets are made by extruding a polymer material and by cutting said polymer material. For a high efficiency of cutting pellets, a die plate is used having apertures for the heated and liquefied polymer material. A plurality of rotating blades cut the polymer strands emerging from said apertures. If an underwater cutter is used, water transports the resulting pellets away and cools said pellets. The quality of pellets depends on a correct alignment of the cutter plate comprising said blades. When the polymer strands emerge from apertures of the die plate, the strands are not fully cooled down, yet. In particular the inside of said strands, which still may be hot or warm, can be easily deformed. Thus, the alignment of the cutter plate has to correspond to the alignment of the apertures to result in a well-defined cutting profile of the pellets.

US 2,252,900 discloses an early example of a pellet forming apparatus with an extrusion mill apparatus comprising a die having at least one row of aligned openings therein for the extrusion of rods of pellet material.

US 3,973,890 discloses an adjustable die face pelletizer having a thermoplastic extruder with a plurality of radially projecting blades to sever extruded heat-plastified materials emerging from a die plate. An objective is to provide a face-cutting apparatus that can effect the high speed production of uniform pellets.

US 6,099,288 discloses a pellet-forming apparatus for extruding high moisture materials in a low-pressure extrusion apparatus having an extruding cylinder and a cooperative extruding rotor.

WO 91/17034 A1 discloses a die rod with at least one plurality of vertically arranged extrusion orifices which, when the die rod is disposed in the die means passage, are adapted to be aligned longitudinally with the channel. The extrudate material is thereby received by the inlet chamber, extruded through the aligned extrusion orifices, and presented to the cutter means, which shears off the material to form pellets.

US 2010/0323047 A1 discloses a cutter hub for an underfluid pelletizer in which pelletizable material such as molten polymer is extruded as strands through orifices in a die plate. The cutter hub has a plurality of cutter blades integral therewith and is made of a single solid onepiece construction of hub and blades. The cutter hub is rotatably driven and moves along the face of the die plate so that the blades cut the extruded strands into pellets.

US 5,641,522 discloses a pelletizer for an extruder, wherein a rotor rotates about the axle and carries a plurality of axially extending cutters for pelletizing the strand. A sleeve is fixed to and over the shaft and has a recess forming a fluid manifold in communication with the conduit and the rotor. The recess has a given angular extent about the sleeve. A plurality of annularly spaced linear arrays of passages in the rotor communicate with the recess manifold in accordance with their angular position about the shaft. The passages of each array are aligned with the edge of a different cutter for sequentially generating arrays of streams of pressurized air impinging upon the cutters after pelletizing as the rotor rotates.

DE 10 2012 104 066 A1 discloses a device for manufacturing and cutting fiber-containing dry pellets that has a die plate, where the fiber-containing materials are pressed through the bores of the die plate by pressing units. A deflecting perforated sheet is arranged downstream the die plate. The holes of the perforated sheet are arranged congruently to the die plate bores.

WO 2016/098422 A1 discloses a pelletizer apparatus which includes an observation unit for observing from the outside a cutting section of the pelletizer apparatus. This allows to conduct constantly visual checks of the cutting section.

To improve the quality of pellets, the alignment of the cutter plate should be corrected when the setup is changed, e.g. after a disassembling of the pelletizer. If such a correction is omitted or done inaccurately, this may cause a low quality of pellets. For polymers, this may be not acceptable, resulting in low quality polymer pellets having a tail of squeezed material.

Hence, it is sometimes needed to stop the pelletizing for such a correction. This is a time-consuming step that lowers the amount of produced pellets. Additionally, the die plate has to be accessed in a narrow space. It may still be hot, and the blades of the cutter plate represent an additional source of danger. Thus, it is very difficult to correct the alignment and there is a risk of accidents with methods of alignment of the art. In particular, protection gloves which are sufficiently heat resistant and sufficiently resistant to blades are not available; metal gloves are not heat resistant and polymer gloves are not sufficiently resistant to blades.

There is accordingly a need to provide an improved method for aligning a cutter plate. In particular, the method according to the present disclosure is fast, very safe and results in a higher precision of alignment than previous methods. The present disclosure further provides a process for preparing high quality pellets using said method for aligning a cutter plate.

### SUMMARY OF THE INVENTION

The present disclosure provides a method according to claim 1 for aligning a cutter plate in a pelletizer for polymer pellets using a remote alignment adjustment device, the pelletizer comprising a die plate having a plurality of apertures for extrudate strands, a cutter plate with a plurality of blades and a drive shaft that is fixedly connected to the cutter plate, said die plate comprising a first side that is facing the cutter plate and an opposing second side facing away from the cutter plate, the remote alignment adjustment device comprising a mechanical distance measurement probe, a camera for taking photos and/or videos and a mounting device that is attachable to the drive shaft, wherein the remote alignment adjustment device is connectable to a data processing device, the method being characterized in that it comprises the following steps:
i) attaching the remote alignment adjustment device to the drive shaft using the mounting device in such a way that the remote alignment adjustment device is fixedly connected to the drive shaft and the mechanical distance measurement probe contacts a first position of the die plate obtaining measuring data of said first position in form of photos and/or videos,
ii) transmitting said measuring data of the first position of the die plate from the remote alignment adjustment device to the data processing device,
iii) rotating the drive shaft to a second position of the die plate in such a way that the mechanical distance measurement probe contacts a second position of the die plate obtaining measuring data of said second position in form of photos and/or videos,
iv) transmitting said measuring data of the second position of the die plate from the remote alignment adjustment device to the data processing device,
v) adjusting the alignment of the cutter plate and/or the die plate based on measuring data of the first and second positions supplied by the data processing device,
vi) removing the remote alignment adjustment device from the pelletizer.

In some embodiments, the mechanical distance measurement probe comprises a dial indicator gauge.

In some embodiments, the dial indicator gauge is closer to the cutter plate than the camera in steps i) to v).

In some embodiments, the method further comprises the steps of
a1) rotating the drive shaft to a third position of the die plate in such a way that the mechanical distance measurement probe contacts a third position of the die plate obtaining measuring data of said third position in form of photos and/or videos,
a2) transmitting said measuring data of the third position of the die plate from the remote alignment adjustment device to the data processing device,
b1) rotating the drive shaft to a fourth position of the die plate in such a way that the mechanical distance measurement probe contacts a fourth position of the die plate obtaining measuring data of said fourth position in form of photos and/or videos,
b2) transmitting said measuring data of the fourth position of the die plate from the remote alignment adjustment device to the data processing device.

In some embodiments, the die plate maintains at least in a section a temperature that differs no more than 50°C from its operating temperature, wherein the operating temperature is the temperature said section has when pelletizing for at least two hours.

In some embodiments, the die plate has at least in a section a temperature of 180 to 280°C that is maintained using a heating fluid.

In some embodiments, the mounting device comprises a flexible and deformable connecting structure that remains rigid when no stronger force than the force of gravitation is applied.

In some embodiments, the mounting device comprises a clamp and/or screws for anchoring to the drive shaft.

In some embodiments, the remote alignment adjustment device comprises a light source. In a preferred embodiment, the remote alignment adjustment device comprises a camera that is an endoscope.

In some embodiments, the polymer pellets are made from polyethylene, in particular high-density polyethylene (HDPE). It was found that the above described method is particularly suitable for said pellets.

In some embodiments, the remote alignment adjustment device is connected wirelessly to the data processing device.

In some embodiments, the data processing device is configured to analyze the measuring data of the mechanical distance measurement probe and to provide adjustment values based on said measuring data for manual adjustment means for adjusting the cutter plate and/or the die plate.

In some embodiments, the cutter plate and the die plate are arranged within a chamber and the manual adjustment means are regulating screws and are arranged externally of the chamber for changing the adjustment of the cutter plate and/or the die plate.

In some embodiments, the cutter plate and the die plate are arranged within a chamber which is configured and designed to be filled with water, wherein the chamber has a reclosable opening for insertion of the remote alignment adjustment device.

The present disclosure also provides a process according to claim 15 for preparing polyethylene pellets in a pelletizer, the pelletizer comprising a die plate having a plurality of apertures for extrudate strands, a cutter plate with a plurality of blades and a drive shaft that is fixedly connected to the cutter plate, wherein the cutter plate and the die plate are arranged within a chamber, said die plate comprising a first side that is facing the cutter plate and an opposing second side facing away from the cutter plate, the remote alignment adjustment device comprising a mechanical distance measurement probe, a camera for taking photos and/or videos and a mounting device that is attachable to the drive shaft, wherein the remote alignment adjustment device is connectable to a data processing device, the process of pelletizing comprising the steps of
a) melting of polyethylene in an extruder,
b) pushing of the melted polyethylene through the die plate,
c) cutting the resulting strands with the blades of the cutter plate into pellets,
e) stopping the extruder and the pelletizer for maintenance,
f) removing water from the chamber,
g) aligning of the cutter plate and/or the die plate as described above,
h) refilling the chamber with water,
i) continuing with pelletizing in accordance with steps a) to c).

### BRIEF DESCRIPTION OF THE DRAWINGS

In the figures:
- Figure 1:: shows a schematic view of an embodiment of a pelletizer with the remote alignment adjustment device in accordance with the present disclosure;
- Figure 2:: shows a schematic view of a frontal view of the embodiment of Figure 1, wherein a front section and the die plate have been removed to allow a view into the chamber;
- Figure 3:: shows a schematic view of a camera of an embodiment of the remote alignment adjustment device;
- Figure 4:: shows an embodiment of a pelletizer the remote alignment adjustment device, wherein the remote alignment adjustment device is connected to a laptop,
- Figure 5:: shows an embodiment of the remote alignment adjustment device having a camera and a mechanical distance measurement probe.

### DETAILED DESCRIPTION OF THE INVENTION

For adjustment of cutter plates, it is common to conduct a manual adjustment, wherein a skilled person directly watches the cutter plate and adjusts said cutter plate using regulating screws. However, this kind of work is highly dangerous due to the narrow working space, the sharp blades, the temperatures within the working space and the lighting situation. With the present disclosure, it was found that the time spent in said space can be reduced drastically whilst ensuring a faster and more precise adjustment.

The present disclosure provides a method for aligning a cutter plate in a pelletizer for polymer pellets using a remote alignment adjustment device, the pelletizer comprising a die plate having a plurality of apertures for extrudate strands, a cutter plate with a plurality of blades, in particular at least four blades, preferably at least 10 blades, in particular preferred at least 20 blades, and a drive shaft that is fixedly connected to the cutter plate, wherein the cutter plate and the die plate are preferably arranged within a chamber, said die plate comprising a first side that is facing the cutter plate and an opposing second side facing away from the cutter plate, the remote alignment adjustment device comprising a mechanical distance measurement probe, a camera for taking photos and/or videos and a mounting device that is attachable to the drive shaft, wherein the remote alignment adjustment device is connectable to a data processing device, preferably a data processing device having a display. Preferably, the mechanical distance measurement probe comprises a dial indicator gauge.

The method comprises the following steps:
i) attaching the remote alignment adjustment device to the drive shaft using the mounting device in such a way that the remote alignment adjustment device is fixedly connected to the drive shaft and the mechanical distance measurement probe contacts a first position of die plate, in particular using mechanical fastening means such a screws and clamps, preferably after insertion of the remote alignment adjustment device through the reclosable opening of the chamber of the pelletizer, obtaining measuring data of said first position in form of photos and/or videos,
ii) transmitting the measuring data of the mechanical distance measurement probe in form of photos and/or videos, in particular a video feed and/or photos showing a dial indicator gauge of the mechanical distance measurement probe, relating to the first position of the die plate from the remote alignment adjustment device to the data processing device, in particular to the display of a data processing device, wherein the data processing device is preferably a laptop, a personal computer (PC) or a tablet that is arranged at a distance from the pelletizer,
iii) rotating the drive shaft to a second position of the die plate in such a way that the mechanical distance measurement probe contacts a second position of the die plate obtaining measuring data of said second position in form of photos and/or videos,
iv) transmitting the measuring data of the mechanical distance measurement probe in form of photos and/or videos, in particular a video feed and/or photos showing a dial indicator gauge of the mechanical distance measurement probe, relating to the second position of the die plate from the remote alignment adjustment device to the data processing device, in particular to the display of a data processing device, wherein the data processing device is preferably a laptop, a personal computer (PC) or a tablet that is arranged at a distance from the pelletizer,
v) adjusting the alignment of the cutter plate and/or the die plate, in particular of the drive shaft and the cutter plate, based on measuring data of the first and second positions supplied by the data processing device, in particular using numerical values calculated by the data processing device and shown on the display, preferably wherein the data processing device is a laptop or a personal computer (PC),
vi) removing the remote alignment adjustment device from the pelletizer, in particular through the reclosable opening of the chamber of the pelletizer.

The present disclosure relates to the adjustment of the cutter plate comprising said blades by ensuring an optimal orientation of the cutter plate in relation to the die plate. An optimal angular orientation is preferably a parallel orientation of the cutter plate to the die plate. Also, the distance has to be adjusted in such a way that there is very little space between the cutter plate and the die plate. If the optimal orientation is achieved the resulting pellets will have a well-defined shape without tails. Preferably the adjusting the alignment of the cutter plate includes adjusting the distance between die plate and cutter plate as well as the angular orientation of the cutter plate.

The step i) of attaching the remote alignment adjustment device to the drive shaft using the mounting device in such a way that the remote alignment adjustment device is fixedly connected to the drive shaft and the mechanical distance measurement probe contacts the first position of die plate may include rotating the drive shaft from an attachment position to the first position of die plate of the die plate, i.e. it may be attached to the drive shaft and then rotated to the first position. Alternatively, it may be attached directly in such a way that the mechanical distance measurement probe contacts the first position without any need for rotating the drive shaft. In both cases the attachment is effected in such a way that in the end the first position is contacted by the mechanical distance measurement probe.

It should be understood that the use of "and/or" is defined inclusively, such that the term "a and/or b" should be read to include the sets: "a and b", "a or b", "a", "b". Preferably, "a and/or b" relates to two entities "a" and "b", wherein at least one of said entities is present in the embodiment described.

In some embodiments of the method in accordance with the present disclosure, the mechanical distance measurement probe comprises a dial indicator gauge, wherein the camera takes photos and/or a video of the dial indicator gauge, wherein said photos and/or video is said measuring data of the mechanical distance measurement probe. It was found that while it is possible to implement a wireless device within an electronic distance measurement probe, the results are surprisingly more reliable when a mechanical distance measurement probe is made use of and the dial indicator gauge of the mechanical distance measurement probe is observed using a camera. Electronic distance measurement probes may be less reliable than their mechanical counterparts. Also, this approach is cost effective as cameras are comparatively cheap. Preferably, a dial indicator gauge displays the values measured using a contact sensor of the mechanical distance measurement probe.

In some embodiments, the dial indicator gauge is closer to the cutter plate than the camera in steps i), ii), iii), iv) and/or v), in particular all steps of the method, wherein the remote alignment adjustment device is attached to the drive shaft. Preferably, a mechanical dial indicator gauge, in particular a dial indicator gauge working without electricity, is used as such gauges are more heat resistant than electronic devices. However, in order to transmit a signal, in particular a wireless signal, relating to said dial indicator gauge, it was found that it is preferred if a camera for taking photos and/or videos is constantly focused on the dial indicator gauge. To protect said camera for taking photos and/or videos, it was found to be preferable when it is removed from the hot cutter plate, in particular further away from the cutter plate than the dial indicator gauge.

It is preferable that the camera is connected, in particular by a wire, to a wireless transmitter or comprises a wireless transmitter, wherein the wireless transmitter is transmitting the data in steps ii) and iv).

In some embodiments, the mounting device comprises a clamp and/or screws for fixedly connecting the remote alignment adjustment device to the drive shaft. It was found that clamps and screws are most preferred for a connection to the drive shaft. Screws for connecting to the drive shaft may be screws that solely interact with the clamp. However, it is also preferred in some embodiments if the mounting device comprises screws that directly are secured to respective apertures in the drive shaft. The above mentioned mechanical fastening means provide a secure hold and can be easily attached and detached.

The present disclosure also relates to embodiments wherein the method comprises the steps of
a1) rotating the drive shaft, in particular by 50° to 130°, preferably 70° to 110°, to a third position of the die plate in such a way that the mechanical distance measurement probe contacts a third position of the die plate obtaining measuring data of said third position,
a2) transmitting measuring data of the mechanical distance measurement probe, in particular a video feed and/or photos showing a dial indicator gauge of the mechanical distance measurement probe, relating to the third position of the die plate from the remote alignment adjustment device to the data processing device, in particular to the display of a data processing device, wherein the data processing device is preferably a laptop, a personal computer (PC) or a tablet that is arranged at a distance from the pelletizer,
b1) rotating the drive shaft, in particular by 50° to 130°, preferably 70° to 110°, to a fourth position of the die plate in such a way that the mechanical distance measurement probe contacts a fourth position of the die plate obtaining measuring data of said fourth position,
b2) transmitting measuring data of the mechanical distance measurement probe, in particular a video feed and/or photos showing a dial indicator gauge of the mechanical distance measurement probe, relating to the fourth position of the die plate from the remote alignment adjustment device to the data processing device, in particular to the display of a data processing device, wherein the data processing device is preferably a laptop, a personal computer (PC) or a tablet that is arranged at a distance from the pelletizer.

Preferably the alignment of the cutter plate is adjusted based on measuring data of 4 to 20 positions, including the first, second, third and fourth position. It was found that it is not needed to cover every position of the die plate with the above described adjustment method. Instead, a limited amount of positions is examined using the remote alignment adjustment device. Surprisingly as little as four positions can be enough to arrive at an ideal final alignment. In one preferred embodiment, the alignment of the cutter plate is adjusted based on measuring data of four to eight different positions of the die plate. Steps a1) to c) as shown above are preferably inserted between steps v) and vi).

In some embodiments. the alignment steps as discussed above are carried out more than once, the drive shaft is rotated a second time to previously examined first, second, third and/or fourth positions and measuring data of the mechanical distance measurement probe is transmitted of each position as described above a second time. This procedure may even be repeated a third or fourth time until the alignment of the cutter plate is correct, in particular parallel to the die plate.

Measuring data are data that can be used for correcting the alignment of the cutter plates. The measuring data are obtained in form of photos and/or videos. The measuring data may be data indicating a distance, wherein said distance is affected by the relative positions of die plate and cutter plate. Measuring data of the first position are data that are at least partially based on information about the first position that is obtained using the remote alignment adjustment device, in particular the mechanical distance measurement probe. Measuring data of the second position are data that are at least partially based on information about the second position that is obtained using the remote alignment adjustment device, in particular the mechanical distance measurement probe. Measuring data of the third position are data that are at least partially based on information about the third position that is obtained using the remote alignment adjustment device, in particular the mechanical distance measurement probe. Measuring data of the fourth position are data about the fourth position that are at least partially based on information that is obtained using the remote alignment adjustment device, in particular the mechanical distance measurement probe. In some embodiments, measuring data relate to photos and/or videos of the dial indicator gauge as described above.

Preferably, adjusting the alignment of the cutter plate comprises the angular orientation and distance of the cutter plate, in particular in relation to the die plate.

In some embodiments, the cutter plate is adjusted based on measuring data of four positions, the positions being the aforementioned first, second, third and fourth position, wherein each position has an angular distance of at least 40° from the closest adjacent position. Preferably the angular distance between adjacent positions is in the range of from 50° to 130°C, in particular from 70° to 110°C, in particular from 85° to 95°, in such a way that all angular distances add up to 360°. In one particularly preferred embodiment the first, second, third and fourth positions are spaced at equal angular distances apart from each other and no other positions are present, i.e. each having a distance of 90° to the closest adjacent position adding up to 360°. In some embodiments, the alignment of the cutter plate is adjusted based on measuring data of four positions, wherein a position in direction of the center of the earth (downwards) indicates 0° and positions are read at 45°, 135°, 225° and 315°.

In some further embodiments, the die plate maintains at least in a section a temperature that differs no more than 50°C from its operating temperature, wherein the operating temperature is the temperature which said section has when pelletizing for at least two hours. Preferably, the temperature differs no more than 25°C, in particular 10°C, from said operating temperature. It was found that the alignment is more precise when the die plate is similarly hot as when it is operating. When cooling the die plate, the alignment is slightly distorted. Thus, the alignment when the die plate is hot avoids such a distortion. In combination with the above-mentioned system, a high degree of security is maintained as the adjustment can be conducted without anybody being too close to the hot die plate.

Preferably a fluid, in particular a water steam at a pressure well above atmospheric pressure, is used for heating of the die plate. In some embodiments, the die plate at least in a section, preferably the whole die plate, has a temperature of 180 to 280°C, in particular 200 to 260°C, that is preferably maintained using said heating fluid. It was found that within this temperature range the distortion as discussed above is less severe even if the above-mentioned difference to the operating temperature cannot be maintained.

In some embodiments, a single, in particular rigid, connecting structure is used for connecting the mechanical distance measurement probe with the mounting device, and preferably also for connecting the camera with the mounting device. This is sometimes the easiest and most preferred built. In other embodiments, the mounting device is separated in two individual parts, a first mounting device and a second mounting device, wherein the remote alignment adjustment device comprises a camera connected to a first mounting device that is connectable to the shaft by a first connecting structure and a mechanical distance measurement probe connected to a second mounting device that is separately connectable to the shaft by a second connecting structure, wherein said first and second mounting devices are not connected. It is thus possible to first install the mechanical distance measurement probe and to later install the camera. However, it was found to be preferable if the remote alignment adjustment device comprises only a single mounting device for the camera and the mechanical distance measurement probe. In particular, it is preferred if said single mounting device has a first and a second connecting structure affixed to the same clamp, preferably a first connecting structure for the camera and a second connecting structure for the mechanical distance measurement probe, in particular the mechanical distance measurement probe comprising the dial indicator gauge.

In some embodiments, the remote alignment adjustment device comprises a flexible and deformable first connecting structure that remains rigid when no stronger force than the force of gravitation is applied, in particular for connecting the camera. This first connecting structure may be a wire construct. Preferably, it is a gooseneck having a flexible, adjustable shaft such as e.g. used in gooseneck lamps. In accordance with the present disclosure, also an inflexible first connecting structure for connecting the camera with the mounting device is possible. However, it was found that the camera can be brought easier into a better position with a flexible neck. In some embodiments, the camera is an endoscope.

Preferably, the camera as described above is connected using said flexible and deformable first connecting structure wherein the mechanical distance measurement probe is connected using a rigid non-deformable second connecting structure, in particular a rigid metal framework. In this embodiment, the rigid non-deformable second connecting structure provides reliable data as said rigid second connecting structure is not dislocated accidentally. However, it was found that a slight dislocation of the camera is acceptable and thus a flexible and deformable first connecting structure as described above is preferable in order to allow for an easy correction of the orientation of the camera if the video feed or photos are not optimal. In some embodiments, the second connecting structure is also used for the camera in addition to or instead of a first connecting structure.

In some embodiments, the above-mentioned camera is an endoscope. It should be understood that an endoscope is an illuminated optical, slender and tubular instrument. It was found that an endoscope is particularly well suited for observing the indicator gauge during adjustment in accordance with the method of the present disclosure. In some embodiments, a flexible endoscope is used, in particular having a flexible gooseneck, in particular as a first connecting structure.

In some embodiments, the remote alignment adjustment device comprises a light source. Preferably, the light source is an LED-lamp. It also may be provided by glass fibre bundles that transmit light.

In some embodiments, the polymer pellets are made from polyethylene, in particular high-density polyethylene (HDPE). It was found that the above described method is particularly preferred for said pellets.

In some embodiments, the remote alignment adjustment device is connected to the data processing device wirelessly, in particular comprises a wireless transmitter for transmitting the measuring data. It is possible to connect the alignment adjustment device to the data processing device using a cable. However, if no cable is used, there is less danger that vibrations of the cable are transmitted to the mechanical distance measurement probe resulting in a distorted signal. If the mechanical distance measurement probe is shaking this can result in a signal feed, in particular signal feed of a dial indicator gauge that may not be suited for a perfect adjustment of the cutter plate with respect to the position of the die plate. This error source can be avoided using a wireless signal such a W-LAN, Bluetooth, IR-Signals etc. Furthermore, if the drive shaft is rotated in accordance with the method, the cable will be rotated as well and may wrap round said drive shaft. It was surprisingly found that if a chamber of metal with an opening is provided, the opening is sufficient to ensure a stable signal feed to the data processing device. Although wireless transmitting methods are known in the art, it was surprisingly found that such wireless transmission is even possible for underwater cutters. Underwater cutters usually have walls made of metal that inhibit any transmission. However, it was found that a reclosable opening in a side wall may be enough to provide for a stable wireless signal.

The data processing device preferably is connected to a display. In some embodiments, the sole purpose of the data processing device may be to convert a digital signal, in particular the measuring data, into a screen content of a display. In other embodiments, the data processing device may have other purposes, too.

Furthermore, the data processing device preferably is configured to analyze the data obtained by the remote alignment device, in particular by the camera, and to provide adjustment values based on said data for manual adjustment means for adjusting the cutter plate and/or the die plate, in particular the die plate using manual adjustment means. It was found that if a camera is used, the data processing device can be modified not only to display a video feed, but to use the video feed to provide adjustment values, i.e. numerical values for adjustment, that contain information about the adjustment. Preferably, said values contain information about the settings of external screws of the pelletizer, e.g. how much that a regulating screw has to be turned based on indications on the gauge.

In some embodiments, the manual adjustment means are regulating screws and are arranged externally of the chamber for changing the adjustment of the cutter plate and/or the die plate. In some embodiments of the method, the first, second, third and fourth positions correspond to a first regulating screw, a second regulating screw, a third regulating screw, and a fourth regulating screw that is arranged outside the chamber. In one embodiment, the first screw is arranged outside opposing the first position, the second screw is arranged outside opposing the second position, the third screw is arranged outside opposing the third position and, the fourth screw is arranged outside opposing the fourth position.

In some embodiments in accordance with the present disclosure, the die plate is removed for an exchange of the cutter plate and reinserted prior to adjusting the blades. Before removal, the chamber is emptied of water.

In some embodiments, the signal of the camera may contain a IR-signal containing information about light in the infrared region. It was found that the hot pelletizer plate can be easily detected and thus more precise information can be obtained. However, usually the video feed of the camera comprises a visual video feed using visible light.

In some embodiments, the chamber has a reclosable opening, in particular a watertight reclosable opening e.g. in a side wall of the chamber, for insertion of the remote alignment adjustment device, wherein the chamber is configured and designed to be filled with water. Preferably the installation of the remote alignment adjusting device in step i) is conducted through this reclosable opening. In some embodiments, this reclosable opening is a small opening, in particular having a smaller diameter that the cutter plate, i.e. the cutter plate cannot be inserted through the reclosable opening.

The present disclosure also relates to a process for preparing polyethylene pellets in a pelletizer, the pelletizer comprising a die plate having a plurality of apertures for extrudate strands, a cutter plate with a plurality of blades and a drive shaft that is fixedly connected to the cutter plate, wherein the cutter plate and the die plate are arranged within a chamber, said die plate comprising a first side that is facing the cutter plate and an opposing second side facing away from the cutter plate, the remote alignment adjustment device comprising a mechanical distance measurement probe, a camera for taking photos and/or videos and a mounting device that is attachable to the drive shaft, wherein the remote alignment adjustment device is connectable to a data processing device, the process of pelletizing comprising the steps of
a) melting of polyethylene in an extruder,
b) pushing of the melted polyethylene through the die plate,
c) cutting the resulting strands with the blades of the cutter plate into pellets,
e) stopping the extruder and the pelletizer for maintenance,
f) removing water from the chamber,
g) aligning of the cutter plate and/or the die plate as described above,
h) refilling the chamber with water,
i) continuing with pelletizing in accordance with steps a) to c).

In some embodiments of the above process, the changing of the cutter plate is conducted using blade protection covers for the blades. It was surprisingly found that protection covers that are magnetic are particularly well suited. Preferably, the protection covers are made of metal or comprise metal. Thus, the present disclosure also relates to such blade protection covers, wherein a blade protection cover surrounds each blade and is attached magnetically. This also increases security of the process. Preferably said blade protection covers are magnetic covers having a first side wall being connected flexibly to a second side wall, wherein the first side wall is magnetically connectable to a first side of the blade and the second side wall is magnetically connectable to the opposing second side of the blade and the flexible region is arranged above the cutting edge of the blade. It should be noted that the protection covers preferably are removed before the alignment method in accordance with the present disclosure is conducted.

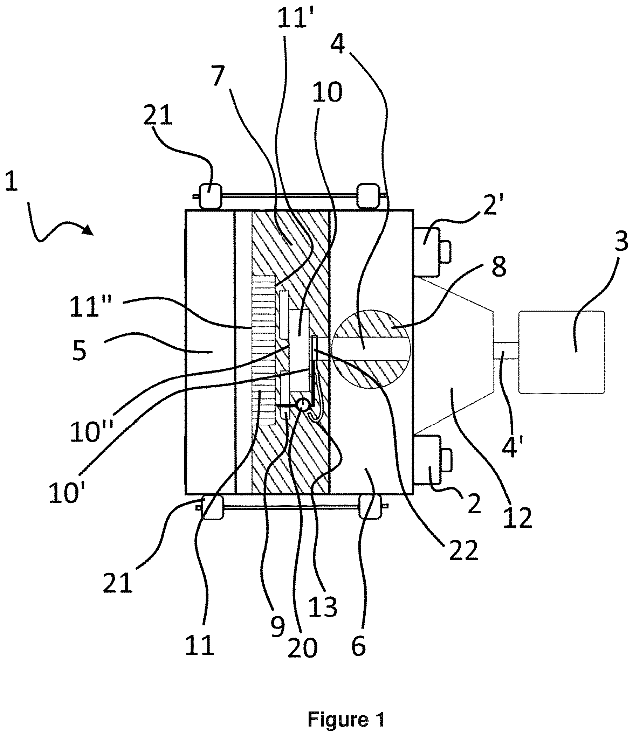

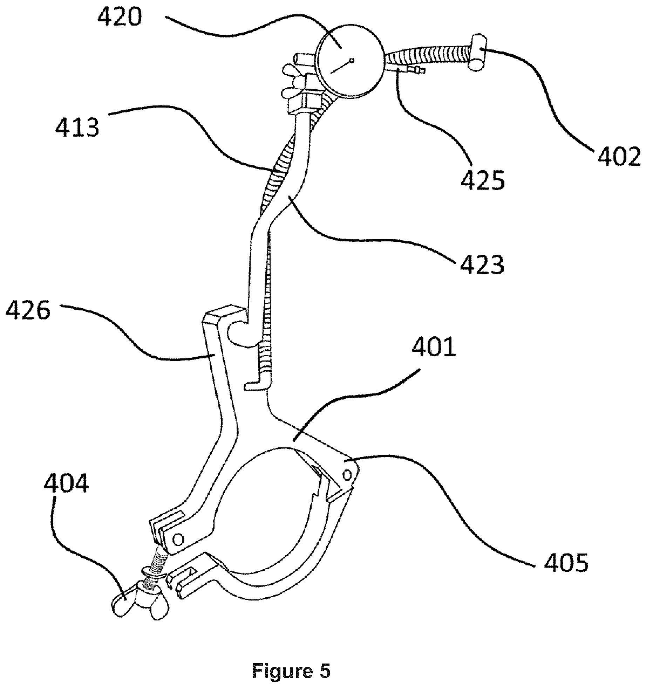

Figure 1 shows a schematic view of a preferred embodiment of the pelletizer (1). The pelletizer comprises a die plate (11) having a plurality of apertures (not shown) for extrudate strands, a cutter plate (10) with a plurality of blades (9) and a drive shaft (4) that is fixedly connected to the cutter plate (10). The die plate (11) comprises a first side (11') that is facing the cutter plate and an opposing second side (11") facing away from the cutter plate. The pelletizer further comprises a remote alignment adjustment device having a camera (13) and a mechanical distance measurement probe (20) comprising a dial indicator gauge which are both connected to a mounting device (22) which is attachable to the drive shaft (4). An embodiment of the mounting device (22) is discussed in more detail in relation to Figure 5. The cutter plate (10) and the die plate (11) are arranged in a housing with a front part (5), a middle part (6) and a backside (12) having a chamber (7). The chamber (7) is accessible through an opening (8). The drive shaft (4) is connected with one end (4') to a motor (3) that is configured to rotate the shaft with a high speed, in particular with different speeds from a low speed to a high speed. The cutter plate (10) also has a first side (10') facing away from the die plate (11) and a second side (10") having the blades facing the first side (11') of the die plate (11). Manual adjustment means (2, 2') that are regulating screws are arranged externally of the chamber (7) for changing the adjustment of the cutter plate (10) and/or the die plate (11). Clamp locks (21) are arranged on both sides of the chamber (7) for closing the chamber (7).

The remote alignment adjustment device (13) comprises the mechanical distance measurement probe (20) comprising the dial indicator gauge and a camera (13) in form of a flexible endoscope having a gooseneck and being attached to the drive shaft (4) using a clamp and screws of the mounting device (20). The camera (13) contains a wireless transmitter for sending measuring data to the data processing device. It should be noted that the inside of the chamber (7) with the cutter plate (10) and the die plate (11) is shown through a large opening. This large opening is just depicted for the purpose of showing the inside. During the method in accordance with the present disclosure, the cutter plate (10) can only be accessed through the opening (8). If manual adjustment was conducted of the alignment a person would look through said opening.

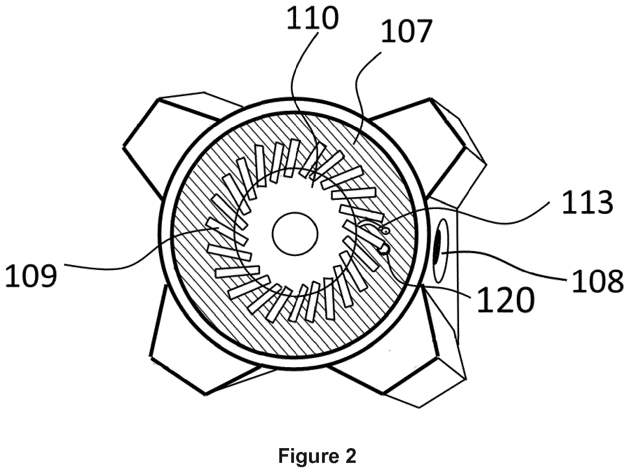

Figure 2 shows a schematic view of the inside of the pelletizer wherein the front part of the housing and the die plate is not visible. A cutter plate (110) having a plurality of blades (109) can be seen. When the orientation of the cutter plate is corrected the chamber (107) is closed apart from the opening (108) in a side of the chamber (107). Connected to the central drive shaft for the cutter plate is a remote alignment adjustment device comprising a camera (113). Figure 2 also shows a dial indicator gauge (120).

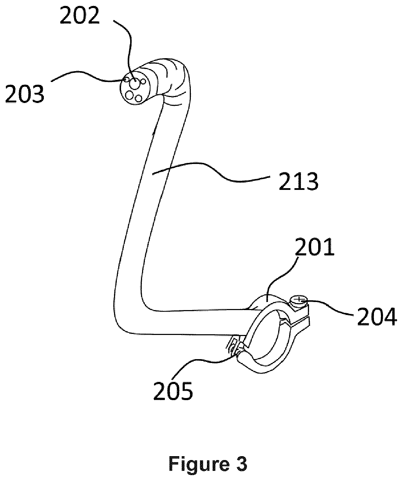

Figure 3 shows a schematic view of an embodiment of the camera (213). The camera (213) comprises a light source (203) that is a LED light. In the embodiment of Figure 3 three LED light sources have been used resulting in a uniform illumination that allows for a more precise adjustment. Additionally, the camera (213) comprises a camera lens (202). The whole built is that of an endoscope. The gooseneck is flexible. The camera (213) is connectable to a shaft using a clamp (201) having a screw (204). The clamp (201) has a hinge (205) for opening said clamp (201). In an alternative embodiment, it is also possible to implement a clamp wherein a screw is directly secured within the shaft. In this case, the shaft needs to have at least one hole preferably with a thread for screws. The embodiment of Figure 3 may be combined with a separate mechanical distance measurement probe (not shown) (not shown) and a separate clamp (not shown) that are also part of the remote alignment device in some embodiments. As can be derived from Figure 5, it can also be connected to the clamp that carries the mechanical distance measurement probe. However, in this embodiment this is not the case and the mechanical distance measurement probe is connected to another clamp (not shown). The remote alignment device thus comprises in this embodiment two spaced apart devices each having its own clamp. This may be preferred to allow for a maximum flexibility in positioning the camera. However, it also is cumbersome to some degree to install two devices. Thus embodiments, wherein the remote alignment device is built in one piece are preferred. One such embodiment is shown in Figure 5.

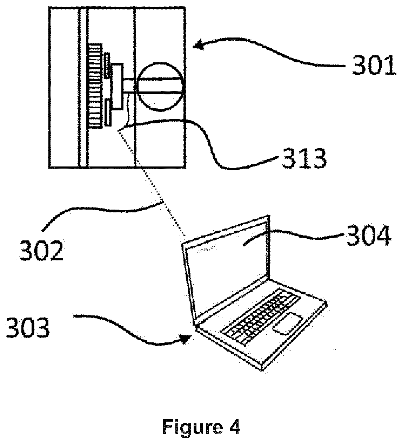

Figure 4 shows a schematic view of a pelletizer (301), wherein the wireless connection (302) between a laptop (303) having a display (304) and a remote alignment adjustment device (313) is shown. Surprisingly the opening provides for a stable wireless connection.

Figure 5 shows an embodiment of the remote alignment adjustment device (426) having a mechanical distance measurement probe (425) and a mounting device (401) that is attachable to the drive shaft, wherein the remote alignment adjustment device (426) comprises a camera (402) for photos and/or videos and the mechanical distance measurement probe (425) comprises a dial indicator gauge (420), wherein the camera (402) may take photos and/or a video of the dial indicator gauge (420), when adjusted correctly. The measuring data consist of or comprise any photos and/or video taken with the camera. The alignment adjustment device (426) is connectable to a drive shaft using a mounting device (401) having a clamp and a screw (404). The clamp has a hinge (405) for opening said clamp. The camera is connected by a deformable first connecting structure (413) and the mechanical distance measurement probe as well as the dial indicator gauge by a rigid second connecting structure (423).

## Claims

1. A method for aligning a cutter plate in a pelletizer for polymer pellets using a remote alignment adjustment device,
the pelletizer (1) comprising a die plate (11) having a plurality of apertures for extrudate strands, a cutter plate (10) with a plurality of blades and a drive shaft (4) that is fixedly connected to the cutter plate (10),
said die plate (11) comprising a first side (11') that is facing the cutter plate and an opposing second side (11") facing away from the cutter plate (10),
the remote alignment adjustment device comprising a mechanical distance measurement probe (20), a camera (13) for taking photos and/or videos and a mounting device (22) that is attachable to the drive shaft (4), wherein the remote alignment adjustment device is connectable to a data processing device,
**characterized in that** the method comprising the following steps:
i) attaching the remote alignment adjustment device to the drive shaft (4) using the mounting device (22) in such a way that the remote alignment adjustment device is fixedly connected to the drive shaft (4) and the mechanical distance measurement probe contacts a first position of the die plate (11) obtaining measuring data of said first position in form of photos and/or videos,
ii) transmitting said measuring data of the first position of the die plate (11) from the remote alignment adjustment device to the data processing device,
iii) rotating the drive shaft (4) to a second position of the die plate (11) in such a way that the mechanical distance measurement probe contacts a second position of the die plate (11) obtaining measuring data of said second position in form of photos and/or videos,
iv) transmitting said measuring data of the second position of the die plate (11) from the remote alignment adjustment device to the data processing device,
v) adjusting the alignment of the cutter plate and/or the die plate based on measuring data of the first and second positions supplied by the data processing device,
vi) removing the remote alignment adjustment device from the pelletizer (1).

2. The method according to claim 1, wherein
the mechanical distance measurement probe (20) comprises a dial indicator gauge.

3. The method according to claim 2, wherein
the dial indicator gauge is closer to the cutter plate than the camera (13) in steps i) to v).

4. The method according to any of the preceding claims, further comprising the steps of
a1) rotating the drive shaft (4) to a third position of the die plate (11) in such a way that the mechanical distance measurement probe contacts a third position of the die plate (11) obtaining measuring data of said third position in form of photos and/or videos,
a2) transmitting said measuring data of the third position of the die plate (11) from the remote alignment adjustment device to the data processing device,
b1) rotating the drive shaft (4) to a fourth position of the die plate (11) in such a way that the mechanical distance measurement probe contacts a fourth position of the die plate (11) obtaining measuring data of said fourth position in form of photos and/or videos,
b2) transmitting said measuring data of the fourth position of the die plate (11) from the remote alignment adjustment device to the data processing device.

5. The method according to any of the preceding claims, wherein
the die plate (11) maintains at least in a section a temperature that differs no more than 50°C from its operating temperature, wherein the operating temperature is the temperature which said section has when pelletizing for at least two hours.

6. The method according to any of the preceding claims, wherein
the die plate (11) has at least in a section a temperature of 180 to 280°C that is maintained using a heating fluid.

7. The method according to any of the preceding claims, wherein
the mounting device (22) comprises a flexible and deformable connecting structure that remains rigid when no stronger force than the force of gravitation is applied.

8. The method according to any of the preceding claims, wherein
the mounting device (22) comprises a clamp and/or screws for fixedly connecting the remote alignment adjustment device to the drive shaft (4).

9. The method according to any of the preceding claims, wherein
the remote alignment adjustment device comprises a light source.

10. The method according to any of the preceding claims, wherein
the polymer pellets are made from polyethylene.

11. The method according to any of the preceding claims, wherein
the remote alignment adjustment device is connected wirelessly to the data processing device.

12. The method according to any of the preceding claims, wherein
the data processing device is configured to analyze the measuring data of the mechanical distance measurement probe and to provide adjustment values based on said measuring data for manual adjustment means (2, 2') for adjusting the cutter plate (10) and/or the die plate (11).

13. The method according to claim 12, wherein
the cutter plate (10) and the die plate (11) are arranged within a chamber (7) and the manual adjustment means (2, 2') are regulating screws and are arranged externally of the chamber (7) for changing the adjustment of the cutter plate (10) and/or the die plate (11).

14. The method according to any of the preceding claims, wherein
the cutter plate (10) and the die plate (11) are arranged within a chamber (7) which is configured and designed to be filled with water and the chamber (7) has a reclosable opening for insertion of the remote alignment adjustment device.

15. A process for preparing polyethylene pellets in a pelletizer,
the pelletizer (1) comprising a die plate (11) having a plurality of apertures for extrudate strands, a cutter plate (10) with a plurality of blades and a drive shaft (4) that is fixedly connected to the cutter plate (10), wherein the cutter plate (10) and the die plate (11) are arranged within a chamber (7),
said die plate (11) comprising a first side (11') that is facing the cutter plate and an opposing second side (11") facing away from the cutter plate (10),
the remote alignment adjustment device comprising a mechanical distance measurement probe (20), a camera (13) for taking photos and/or videos and a mounting device (22) that is attachable to the drive shaft (4),
wherein the remote alignment adjustment device is connectable to a data processing device,
the process of pelletizing comprising the steps of
a) melting of polyethylene in an extruder,
b) pushing of the melted polyethylene through the die plate (11),
c) cutting the resulting strands with the blades of the cutter plate (10) into pellets,
e) stopping the extruder and the pelletizer for maintenance,
f) removing water from the chamber (7),
g) aligning of the cutter plate and/or the die plate in accordance with claims 1 to 14,
h) refilling the chamber (7) with water,
i) continuing with pelletizing in accordance with steps a) to c).

## Patentansprüche

1. Verfahren zur Ausrichtung einer Messerplatte in einem Granulator für Polymerpellets unter Verwendung einer Fernausrichtungsjustierungsvorrichtung,
wobei der Granulator (1) eine Lochplatte (11) mit einer Vielzahl von Öffnungen für Extrudatstränge, eine Messerplatte (10) mit einer Vielzahl von Klingen und eine Antriebswelle (4) umfasst, die fixiert mit der Messerplatte (10) verbunden ist,
wobei die Lochplatte (11) eine erste Seite (11'), die zu der Messerplatte weist, und eine gegenüberliegende zweite Seite (11") umfasst, die von der Messerplatte (10) weg weist,
wobei die Fernausrichtungsjustierungsvorrichtung eine mechanische Abstandmesssonde (20), eine Kamera (13) zum Aufnehmen von Fotos und/oder Videos, und eine Montagevorrichtung (22), die an der Antriebswelle (4) anbringbar ist, umfasst, wobei die Fernausrichtungsjustierungsvorrichtung mit einer Datenverarbeitungsvorrichtung verbindbar ist,
**dadurch gekennzeichnet, dass** das Verfahren die folgenden Schritte umfasst:
i) Befestigen der Fernausrichtungsjustierungsvorrichtung an der Antriebswelle (4) unter Verwendung der Montagevorrichtung (22) derart, dass die Fernausrichtungsjustierungsvorrichtung fest mit der Antriebswelle (4) verbunden ist und die mechanische Abstandmesssonde eine erste Position der Lochplatte (11) kontaktiert, wodurch Messdaten der ersten Position in Form von Fotos und/oder Videos erhalten werden,
ii) Übertragen der Messdaten der ersten Position der Lochplatte (11) von der Fernausrichtungsjustierungsvorrichtung an die Datenverarbeitungsvorrichtung,
iii) Drehen der Antriebswelle (4) zu einer zweiten Position der Lochplatte (11) derart, dass die mechanische Abstandmesssonde eine zweite Position der Lochplatte (11) kontaktiert, wodurch Messdaten der zweiten Position in Form von Fotos und/oder Videos erhalten werden,
iv) Übertragen der Messdaten der zweiten Position der Lochplatte (11) von der Fernausrichtungsjustierungsvorrichtung an die Datenverarbeitungsvorrichtung,
v) Justieren der Ausrichtung der Messerplatte und/oder der Lochplatte basierend auf Messdaten der ersten und zweiten Position, welche von der Datenverarbeitungsvorrichtung geliefert werden,
vi) Entfernen der Fernausrichtungsjustierungsvorrichtung von dem Granulator (1).

2. Verfahren nach Anspruch 1, wobei die mechanische Abstandmesssonde (20) eine Messuhranzeige umfasst.

3. Verfahren nach Anspruch 2, wobei die Messuhranzeige sich in den Schritten i) bis v) näher an der Messerplatte befindet als die Kamera (13).

4. Verfahren nach einem der vorhergehenden Ansprüche, das des Weiteren die Schritte umfasst:
a1) Drehen der Antriebswelle (4) zu einer dritten Position der Lochplatte (11) derart,
dass die mechanische Abstandmesssonde eine dritte Position der Lochplatte (11) kontaktiert, wodurch Messdaten der dritten Position in Form von Fotos und/oder Videos erhalten werden,
a2) Übertragen der Messdaten der dritten Position der Lochplatte (11) von der Fernausrichtungsjustierungsvorrichtung an die Datenverarbeitungsvorrichtung,
b1) Drehen der Antriebswelle (4) zu einer vierten Position der Lochplatte (11) derart,
dass die mechanische Abstandmesssonde eine vierte Position der Lochplatte (11) kontaktiert, wodurch Messdaten der vierten Position in Form von Fotos und/oder Videos erhalten werden,
b2) Übertragen der Messdaten der vierten Position der Lochplatte (11) von der Fernausrichtungsjustierungsvorrichtung an die Datenverarbeitungsvorrichtung.

5. Verfahren nach einem der vorhergehenden Ansprüche, wobei die Lochplatte (11) in mindestens einem Segment eine Temperatur beibehält, die sich um nicht mehr als 50 °C von ihrer Betriebstemperatur unterscheidet, wobei die Betriebstemperatur die Temperatur ist, die das Segment hat, wenn mindestens zwei Stunden lang pelletiert wird.

6. Verfahren nach einem der vorhergehenden Ansprüche, wobei die Lochplatte (11) in mindestens einem Segment eine Temperatur von 180 bis 280 °C aufweist, die unter Verwendung eines Heizfluids gehalten wird.

7. Verfahren nach einem der vorhergehenden Ansprüche, wobei die Montagevorrichtung (22) eine flexible und verformbare Verbindungsstruktur umfasst, die starr bleibt, wenn keine stärkere Kraft als die Schwerkraft ausgeübt wird.

8. Verfahren nach einem der vorhergehenden Ansprüche, wobei die Montagevorrichtung (22) eine Klemme und/oder Schrauben zum fest Verbinden der Fernausrichtungsjustierungsvorrichtung mit der Antriebswelle (4) umfasst.

9. Verfahren nach einem der vorhergehenden Ansprüche, wobei die Fernausrichtungsjustierungsvorrichtung eine Lichtquelle umfasst.

10. Verfahren nach einem der vorhergehenden Ansprüche, wobei die Polymerpellets aus Polyethylen gefertigt sind.

11. Verfahren nach einem der vorhergehenden Ansprüche, wobei die Fernausrichtungsjustierungsvorrichtung drahtlos mit der Datenverarbeitungsvorrichtung verbunden ist.

12. Verfahren nach einem der vorhergehenden Ansprüche, wobei die Datenverarbeitungsvorrichtung dazu eingerichtet ist, die Messdaten der mechanischen Abstandmesssonde zu analysieren und auf den Messdaten basierende Justierungswerte für manuelle Justierungsmittel (2, 2'), die die Messerplatte (10) und/oder die Lochplatte (11) justieren, bereitzustellen.

13. Verfahren nach Anspruch 12, wobei die Messerplatte (10) und die Lochplatte (11) innerhalb einer Kammer (7) angeordnet sind, und die manuellen Justierungsmittel (2, 2') Stellschrauben sind und diese außerhalb der Kammer (7) angeordnet sind, um die Justierung der Messerplatte (10) und/oder der Lochplatte (11) zu verändern.

14. Verfahren nach einem der vorhergehenden Ansprüche, wobei die Messerplatte (10) und die Lochplatte (11) innerhalb einer Kammer (7) angeordnet sind, die dazu eingerichtet und konzipiert ist, mit Wasser gefüllt zu werden, und wobei die Kammer (7) eine wiederverschließbare Öffnung zum Einführen der Fernausrichtungsjustierungsvorrichtung aufweist.

15. Verfahren zur Herstellung von Polyethylenpellets in einem Granulator,
wobei der Granulator (1) eine Lochplatte (11) mit einer Vielzahl von Öffnungen für Extrudatstränge, eine Messerplatte (10) mit einer Vielzahl von Klingen und eine Antriebswelle (4) umfasst, die fixiert mit der Messerplatte (10) verbunden ist, wobei die Messerplatte (10) und die Lochplatte (11) innerhalb einer Kammer (7) angeordnet sind,
wobei die Lochplatte (11) eine erste Seite (11'), die zu der Messerplatte weist, und eine gegenüberliegende zweite Seite (11") umfasst, die von der Messerplatte (10) weg weist,
wobei die Fernausrichtungsjustierungsvorrichtung eine mechanische Abstandmesssonde (20), eine Kamera (13) zum Aufnehmen von Fotos und/oder Videos, und eine Montagevorrichtung (22), die an der Antriebswelle (4) anbringbar ist, umfasst,
wobei die Fernausrichtungsjustierungsvorrichtung mit einer Datenverarbeitungsvorrichtung verbindbar ist,
wobei das Pelletierverfahren die folgenden Schritte umfasst:
a) Schmelzen des Polyethylens in einem Extruder,
b) Drücken des geschmolzenen Polyethylens durch die Lochplatte (11),
c) Schneiden der resultierenden Stränge mit den Klingen der Messerplatte (10) zu Pellets,
e) Stoppen des Extruders und des Granulators zur Wartung,
f) Entfernen von Wasser aus der Kammer (7),
g) Ausrichten der Messerplatte und/oder der Lochplatte gemäß den Ansprüchen 1 bis 14,
h) erneutes Befüllen der Kammer (7) mit Wasser,
i) Fortführen des Pelletierens gemäß den Schritten a) bis c).

## Revendications

1. Procédé d'alignement d'une plaque de coupe dans un granulateur pour pastilles de polymère à l'aide d'un dispositif de réglage d'alignement à distance,
le granulateur (1) comprenant une plaque de matrice (11) présentant une pluralité d'ouvertures pour des brins d'extrudat, une plaque de coupe (10) pourvue d'une pluralité de lames et un arbre d'entraînement (4) qui est relié de manière fixe à la plaque de coupe (10),
ladite plaque de matrice (11) comprenant un premier côté (11') qui fait face à la plaque de coupe et un deuxième côté opposé (11") orienté à l'opposé de la plaque de coupe (10),
le dispositif de réglage d'alignement à distance comprenant une sonde mécanique de mesure de distance (20), une caméra (13) pour prendre des photos et/ou des vidéos et un dispositif de montage (22) qui peut être fixé à l'arbre d'entraînement (4), le dispositif de réglage d'alignement à distance pouvant être connecté à un dispositif de traitement de données,
**caractérisé en ce que**
le procédé comprend les étapes suivantes :
i) la fixation du dispositif de réglage d'alignement à distance à l'arbre d'entraînement (4) à l'aide du dispositif de montage (22) de telle sorte que le dispositif de réglage d'alignement à distance est relié de manière fixe à l'arbre d'entraînement (4) et la sonde mécanique de mesure de distance entre en contact avec une première position de la plaque de matrice (11) pour obtenir des données de mesure de ladite première position sous la forme de photos et/ou de vidéos,
ii) la transmission desdites données de mesure de la première position de la plaque de matrice (11) à partir du dispositif de réglage d'alignement à distance au dispositif de traitement de données,
iii) la rotation de l'arbre d'entraînement (4) vers une deuxième position de la plaque de matrice (11) de telle sorte que la sonde mécanique de mesure de distance entre en contact avec une deuxième position de la plaque de matrice (11) pour obtenir des données de mesure de ladite deuxième position sous la forme de photos et/ou de vidéos,
iv) la transmission desdites données de mesure de la deuxième position de la plaque de matrice (11) à partir du dispositif de réglage d'alignement à distance au dispositif de traitement de données,
v) le réglage de l'alignement de la plaque de coupe et/ou de la plaque de matrice sur la base des données de mesure de la première et de la deuxième position fournies par le dispositif de traitement de données,
vi) le retrait du dispositif de réglage d'alignement à distance du granulateur (1).

2. Procédé selon la revendication 1,
la sonde mécanique de mesure de distance (20) comprenant une jauge d'indicateur à cadran.

3. Procédé selon la revendication 2,
la jauge d'indicateur à cadran étant plus proche de la plaque de coupe que ne l'est la caméra (13) dans les étapes i) à v).

4. Procédé selon l'une quelconque des revendications précédentes, comprenant en outre les étapes de
a1) rotation de l'arbre d'entraînement (4) vers une troisième position de la plaque de matrice (11) de telle sorte que la sonde mécanique de mesure de distance entre en contact avec une troisième position de la plaque de matrice (11) pour obtenir des données de mesure de ladite troisième position sous la forme de photos et/ou de vidéos,
a2) transmission desdites données de mesure de la troisième position de la plaque de matrice (11) à partir du dispositif de réglage d'alignement à distance au dispositif de traitement de données.
b1) rotation de l'arbre d'entraînement (4) vers une quatrième position de la plaque de matrice (11) de telle sorte que la sonde mécanique de mesure de distance entre en contact avec une quatrième position de la plaque de matrice (11) pour obtenir des données de mesure de ladite quatrième position sous la forme de photos et/ou de vidéos,
b2) transmission desdites données de mesure de la quatrième position de la plaque de matrice (11) à partir du dispositif de réglage d'alignement à distance au dispositif de traitement de données.

5. Procédé selon l'une quelconque des revendications précédentes,
la plaque de matrice (11) maintenant au moins dans une section une température qui ne diffère pas de plus de 50°C de sa température de fonctionnement, la température de fonctionnement étant la température que ladite section présente lors de la granulation pendant au moins deux heures.

6. Procédé selon l'une quelconque des revendications précédentes,
la plaque de matrice (11) présentant au moins dans une section une température de 180 à 280°C qui est maintenue à l'aide d'un fluide de chauffage.

7. Procédé selon l'une quelconque des revendications précédentes,
le dispositif de montage (22) comprenant une structure de liaison flexible et déformable qui reste rigide lorsqu'aucune force plus forte que la force de gravitation n'est appliquée.

8. Procédé selon l'une quelconque des revendications précédentes,
le dispositif de montage (22) comprenant une pince et/ou des vis pour relier de manière fixe le dispositif de réglage d'alignement à distance à l'arbre d'entraînement (4).

9. Procédé selon l'une quelconque des revendications précédentes,
le dispositif de réglage d'alignement à distance comprenant une source de lumière.

10. Procédé selon l'une quelconque des revendications précédentes,
les pastilles de polymère étant constituées de polyéthylène.

11. Procédé selon l'une quelconque des revendications précédentes,
le dispositif de réglage d'alignement à distance étant connecté sans fil au dispositif de traitement de données.

12. Procédé selon l'une quelconque des revendications précédentes,
le dispositif de traitement de données étant configuré pour analyser les données de mesure de la sonde mécanique de mesure de distance et pour fournir des valeurs de réglage sur la base desdites données de mesure pour des moyens manuels de réglage (2, 2') destinés à régler la plaque de coupe (10) et/ou la plaque de matrice (11).

13. Procédé selon la revendication 12,
la plaque de coupe (10) et la plaque de matrice (11) étant agencées à l'intérieur d'une chambre (7) et les moyens manuels de réglage (2, 2') étant des vis de régulation et étant disposés à l'extérieur de la chambre (7) pour modifier le réglage de la plaque de coupe (10) et/ou de la plaque de matrice (11).

14. Procédé selon l'une quelconque des revendications précédentes,
la plaque de coupe (10) et la plaque de matrice (11) étant agencées à l'intérieur d'une chambre (7) qui est conçue pour être remplie d'eau et la chambre (7) présentant une ouverture refermable pour l'introduction du dispositif de réglage d'alignement à distance.

15. Procédé de préparation de pastilles de polyéthylène dans un granulateur,
le granulateur (1) comprenant une plaque de matrice (11) présentant une pluralité d'ouvertures pour des brins d'extrudat, une plaque de coupe (10) pourvue d'une pluralité de lames et un arbre d'entraînement (4) qui est relié de manière fixe à la plaque de coupe (10), la plaque de coupe (10) et la plaque de matrice (11) étant agencées à l'intérieur d'une chambre (7),
ladite plaque de matrice (11) comprenant un premier côté (11') qui fait face à la plaque de coupe et un deuxième côté opposé (11") orienté à l'opposé de la plaque de coupe (10),
le dispositif de réglage d'alignement à distance comprenant une sonde mécanique de mesure de distance (20), une caméra (13) pour prendre des photos et/ou des vidéos et un dispositif de montage (22) qui peut être fixé à l'arbre d'entraînement (4),
le dispositif de réglage d'alignement à distance pouvant être connecté à un dispositif de traitement de données,
le procédé de granulation comprenant les étapes de
a) fusion de polyéthylène dans une extrudeuse,
b) poussée du polyéthylène fondu à travers la plaque de matrice (11),
c) coupe des brins résultants à l'aide des lames de la plaque de coupe (10) en pastilles,
e) arrêt de l'extrudeuse et du granulateur à des fins d'entretien,
f) élimination de l'eau de la chambre (7),
g) alignement de la plaque de coupe et/ou de la plaque de matrice selon les revendications 1 à 14,
h) remplissage de la chambre (7) avec de l'eau,
i) poursuite de la granulation selon les étapes a) à c).
